# DEMANDE DE BREVET EUROPEEN

(11) **EP 3 062 102 A1**
(43) Date de publication de la demande: **31.08.2016**
(21) Numéro de dépôt: 16156303.6
(22) Date de dépôt: 18.02.2016
(51) Int. Cl.: G01N 29/28, B61K 9/12

(54) **SUPPORT DE CAPTEUR A ULTRASONS ET SYSTEME DE DETECTION COMPORTANT UN TEL SUPPORT**

(30) Priorité: 25.02.2015 FR 1551603
(71) Demandeur: SNCF MOBILITES, 93200 Saint-Denis (FR)
(72) Inventeur: BEAUBIER, David, 91650 BREUILLET (FR); CATO, Stéphane, 91530 SAINT MAURICE MONTCOURONNE (FR); RICHARD, Bastien, 94320 THIAIS (FR)
(74) Mandataire: Argyma

(57) **Abrégé**

Un support de capteur à ultrasons (5), en particulier pour un système manuel de détection de défauts dans une pièce à contrôler d'un véhicule ferroviaire, le support de capteur (5) comprend une enceinte (6), adaptée pour être remplie d'un liquide de propagation, comprenant une extrémité amont (61) comprenant une ouverture de montage (62) apte à recevoir un capteur à ultrasons et une extrémité aval ouverte (63), et un organe de contact (7) relié à l'extrémité aval (63) de ladite enceinte (6) et comprenant une ouverture d'accès (71) débouchant à l'intérieur de l'enceinte (6), les ouvertures de montage (62) et d'accès (71) étant alignées selon un axe de propagation (P), l'organe de contact (7) étant, au moins en partie, flexible de manière à assurer un contact étanche avec la pièce à contrôler afin de fermer l'enceinte (6).

## Description

### DOMAINE TECHNIQUE GENERAL ET ART ANTERIEUR

La présente invention concerne la maintenance d'un véhicule ferroviaire et, plus particulièrement, le contrôle d'une roue d'un véhicule ferroviaire par ultrasons.

### PRESENTATION GENERALE DE L'INVENTION

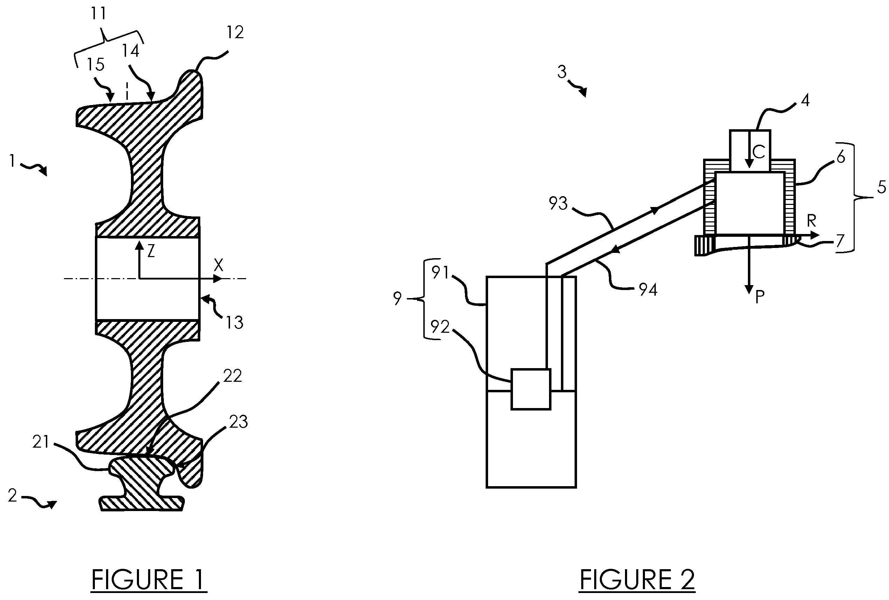

De manière classique, un véhicule ferroviaire comporte plusieurs voitures reliées entre elles et montées sur des bogies comprenant des essieux. Chaque essieu comprend deux roues, chacune adaptée pour venir en contact avec un des deux rails de circulation d'une voie ferroviaire. A cet effet, en référence à la figure 1, un rail 2 comprend, de manière classique, un champignon 21, adapté pour être en contact avec une roue 1 d'un véhicule ferroviaire. Le champignon 21 comprend une surface supérieure 22 et au moins une surface latérale 23. Une roue 1 comprend une table de roulement 11 adaptée pour être en contact avec la surface supérieure 22 du rail 2, et une surface de guidage adaptée pour être en contact avec la surface latérale 23 du rail 2. La surface de guidage de la roue 1 est connue de l'homme du métier sous la désignation « boudin 12 ».

Lors du déplacement du véhicule ferroviaire sur la voie ferroviaire, les roues sont en contact avec les rails, ce qui peut entraîner une usure interne par fatigue des roues et l'apparition de défauts tels que des fissures dans le volume interne d'une roue. Afin de limiter le risque de rupture d'une roue, chaque roue doit être contrôlée de manière périodique dans un centre de maintenance.

En pratique, chaque roue est contrôlée de manière volumique au moyen d'un capteur à ultrasons qui est adapté pour émettre des ultrasons qui se propagent à travers le volume de la roue. Lorsque les ultrasons rencontrent un défaut, telle qu'une fissure interne ou un écaillage, les ultrasons sont réfléchis par le défaut, puis reçus par le capteur à ultrasons. Le capteur à ultrasons détermine alors la position du défaut à partir du temps mesuré entre l'émission et la réception desdits ultrasons. Une telle détection d'un défaut par ultrasons est connue de l'homme du métier et ne sera pas détaillée plus en avant.

Il existe deux types de contrôle par ultrasons, d'une part, le contrôle automatique consistant à déplacer un véhicule ferroviaire sur un banc de contrôle fixe et, d'autre part, le contrôle manuel durant lequel un opérateur se déplace le long d'un véhicule ferroviaire fixe pour contrôler chacune des roues

Pour contrôler automatiquement chaque roue d'un véhicule ferroviaire, le véhicule ferroviaire est placé dans un banc automatisé comprenant un ou plusieurs capteurs à ultrasons. Un tel banc automatisé présente une taille importante afin de recevoir un véhicule ferroviaire et permettre le contrôle de chacune de ses roues. Le nombre de bancs étant limité, il est nécessaire de multiplier les étapes de déplacement de véhicules ferroviaires dans le centre de maintenance afin que chaque véhicule puisse être contrôlé. Aussi, sans parler de son coût élevé, une telle mise en oeuvre est chronophage.

Pour contrôler manuellement chaque roue d'un véhicule ferroviaire, un opérateur utilise classiquement un capteur à ultrasons qui peut être réalisé en dehors d'un centre de maintenance. Une première méthode consiste à placer directement le capteur à ultrasons contre la surface de roulement de la roue. Dans ce cas, un élément de propagation, tel que de la graisse ou du gel, est utilisé, à l'interface entre le capteur à ultrasons et la roue, afin de permettre la propagation des ultrasons dans la roue et empêcher tout frottement. Une telle méthode comprend une étape d'application d'un élément de propagation antérieurement au contrôle et une étape de nettoyage de la roue postérieurement au contrôle, qui sont coûteuses et chronophages. De plus, une usure de la roue et/ou une forme irrégulière de la roue peuvent entraîner un mauvais contact du capteur à ultrasons contre la roue et ainsi fausser les mesures.

Dans un autre domaine, on connaît, par la demande de brevet EP0676322, une méthode pour détecter des défauts d'un rail qui consiste à placer indirectement le capteur à ultrasons contre le rail. Dans cette demande, un support de capteur est positionné entre le capteur à ultrasons et le rail afin de permettre la formation d'un film d'eau dans lequel se propagent les ultrasons. A cet effet, le support de capteur comporte une arrivée d'eau et une sortie d'eau afin de permettre la circulation d'un flux d'eau à l'interface dans lequel peuvent se propager les ultrasons. De manière incidente, afin d'éviter une usure du support de capteur lorsque le capteur à ultrasons est déplacé à une vitesse importante le long du rail, le support de capteur comporte une semelle rigide pour réduire les frottements avec le rail.

En pratique, un flux constant d'eau passe par le support de capteur, maintenant ainsi un film d'eau entre le capteur à ultrasons et le rail de manière à assurer la propagation des ultrasons. Un tel capteur à ultrasons à contact indirect consomme une quantité importante d'eau qui se déverse sur les rails. Aussi, comme enseigné par la demande de brevet EP0676322, il est nécessaire de prévoir un réservoir d'eau de grande capacité afin de contrôler une grande longueur de rail. Un tel système de contrôle n'est ainsi pas aisément transportable.

De plus, une telle solution n'est pas transposable pour le contrôle d'une roue montée à un véhicule ferroviaire étant donné que l'eau déversée pourrait engendrer des risques, en particulier, pour les travaux de maintenance réalisés à proximité et simultanément au contrôle des roues: risque électrique, risque de chute, pénibilité de l'opérateur, etc. Aussi, une telle solution ne peut être exploitée que lorsque les essieux sont déposés afin d'être isolés du véhicule ferroviaire, ce qui présente un inconvénient.

L'invention a donc pour but de remédier à ces inconvénients en proposant un support de capteur d'un système manuel de détection de défauts dans une roue de véhicule ferroviaire permettant de : réduire la quantité totale d'eau nécessaire, réduire la quantité d'eau déversée au sol et rendre le système transportable.

### PRESENTATION GENERALE DE L'INVENTION

L'invention concerne un support de capteur à ultrasons, en particulier pour un système manuel de détection de défauts dans une pièce à contrôler d'un véhicule ferroviaire, le support de capteur comprenant:
- une enceinte, adaptée pour être remplie d'un liquide de propagation, comprenant une extrémité amont comprenant une ouverture de montage apte à recevoir un capteur à ultrasons et une extrémité aval ouverte, et
- un organe de contact relié à l'extrémité aval de ladite enceinte et comprenant une ouverture d'accès débouchant à l'intérieur de l'enceinte, les ouvertures de montage et d'accès étant alignées selon un axe de propagation.

Le support de capteur est remarquable en ce que l'organe de contact est, au moins en partie, flexible de manière à assurer un contact étanche avec la pièce à contrôler afin de fermer l'enceinte.

Grâce au support de capteur selon l'invention, la détection de défauts dans une pièce de véhicule ferroviaire est aisée grâce à l'organe de contact flexible qui permet au support de capteur de s'adapter à la forme de la pièce à contrôler. Ceci permet de fermer l'enceinte, qui est remplie de liquide de propagation. La quantité de liquide se déversant à proximité du véhicule ferroviaire est réduite, ce qui assure un contrôle sécurisé pour un opérateur. De plus, l'utilisation d'un organe de contact flexible permet de résister à l'usure engendrée par le déplacement du support de capteur sur la pièce à contrôler.

De préférence, l'organe de contact s'étendant sensiblement transversalement audit axe de propagation, l'ouverture d'accès de l'organe de contact s'étendant longitudinalement selon un axe de détection, l'organe de contact comprend une section, définie dans un plan de section, qui est croissante selon l'axe de détection afin de coopérer par complémentarité de formes avec la pièce à contrôler afin d'assurer l'étanchéité du contact avec la pièce. Une telle caractéristique est particulièrement avantageuse pour contrôler une roue dont la table de roulement comporte une partie inclinée.

De manière préférée, la section de l'organe de contact définit une partie médiane, une première partie d'extrémité dont l'épaisseur est inférieure à celle de la partie médiane et une deuxième partie d'extrémité dont l'épaisseur est supérieure à celle de la partie médiane. Ainsi, l'organe de contact peut coopérer avec une pièce à contrôler dont la section comprend une partie plane et une partie inclinée, en particulier, une roue ferroviaire de standard européen.

De préférence, la partie médiane possède une épaisseur comprise entre 12 mm et 15 mm, la première partie d'extrémité fine possède une épaisseur comprise entre 7 mm et 12 mm et la deuxième partie d'extrémité épaisse possède une épaisseur comprise entre 15 mm et 25 mm afin que la section de l'organe de contact soit complémentaire de la section de la pièce à contrôler.

De manière préférée, l'organe de contact comprend une partie aval flexible et une partie amont rigide reliée à ladite enceinte afin de relier l'organe de contact à l'enceinte de manière sécurisée.

De préférence, l'organe de contact comprend une pluralité d'orifices de fixation à l'enceinte afin de relier l'organe de contact à l'enceinte de manière solidaire. De manière préférée, les orifices sont répartis selon la longueur de l'ouverture d'accès de l'organe de contact afin de rigidifier l'ouverture d'accès.

De préférence, l'enceinte comporte un orifice d'entrée et un orifice d'évacuation de liquide de manière à permettre une circulation de fluide.

De manière préférée, le support de capteur comprend au moins une roue de guidage adaptée pour être en contact avec la pièce à contrôler afin de permettre le déplacement du support de capteur sur la pièce.

De préférence, la roue de guidage est aimantée de manière à maintenir le contact entre le support de capteur et la pièce à contrôler afin de réduire l'effort qu'un opérateur doit fournir afin de maintenir le support de capteur contre la pièce à contrôler.

De manière préférée, le support de capteur comprend au moins une première roue de guidage dont l'axe est parallèle à l'axe de détection afin de positionner et permettre le déplacement du support de capteur contre la pièce à contrôler.

De préférence, le support de capteur comprend au moins une deuxième roue de guidage, d'axe parallèle à l'axe P, afin de guider latéralement le support de capteur lors de son déplacement contre la pièce à contrôler.

L'invention vise également un système de détection comprenant un support de capteur, tel que présenté précédemment, et au moins un capteur à ultrasons monté dans l'ouverture de montage de manière à émettre des ultrasons selon l'axe de propagation.

Grâce au système de détection selon l'invention, les ultrasons émis par le capteur sont transmis à la pièce à contrôler par le liquide de propagation.

De préférence, le système de détection comprend au moins un système hydraulique adapté pour générer une circulation de liquide dans l'enceinte du support de capteur afin d'éliminer toute bulle d'air de l'enceinte pouvant perturber la propagation des ultrasons dans la pièce à contrôler.

De manière préférée, le système hydraulique comprend au moins un réservoir de liquide et au moins une pompe hydraulique afin d'alimenter l'enceinte en liquide de propagation.

De préférence, le réservoir possède une capacité inférieure à 30 litres afin de rendre le système de détection transportable.

L'invention vise également un ensemble d'une pièce à contrôler d'un véhicule ferroviaire et d'un système de détection, tel que présenté précédemment, la pièce à contrôler comprenant une table de roulement dont la section axiale comprend une partie plane et une partie inclinée, l'organe de contact est en contact avec les parties de la table de roulement de la pièce à contrôler.

Grâce à l'invention, l'organe de contact assure l'étanchéité du contact avec une pièce dont la section comprend une partie plane et une partie inclinée, en particulier, une roue ferroviaire.

De préférence, l'axe de détection de l'organe de contact est parallèle à l'axe de la pièce afin de contrôler intégralement la table de roulement de la pièce à contrôler en un seul passage du système de détection.

### PRESENTATION DES FIGURES

L'invention sera mieux comprise à la lecture de la description qui va suivre, donnée uniquement à titre d'exemple, et se référant aux dessins annexés sur lesquels :
- la figure 1 est une vue schématique en coupe d'une roue d'un véhicule ferroviaire sur un rail,
- la figure 2 est une vue schématique de face d'une forme de réalisation d'un système de détection selon l'invention,
- la figure 3 est une vue schématique en coupe d'un support de capteur du système de détection d'un défaut,
- la figure 4 est une vue schématique de face d'un organe de contact du support de capteur de la figure 3,
- la figure 5 est une vue schématique de dessous de l'organe de contact de la figure 4,
- la figure 6 est une vue schématique de côté d'une étape de contrôle, et
- la figure 7 est une vue schématique de face d'une étape de contrôle.

Il faut noter que les figures exposent l'invention de manière détaillée pour mettre en oeuvre l'invention, lesdites figures pouvant bien entendu servir à mieux définir l'invention le cas échéant.

### DESCRIPTION D'UN OU PLUSIEURS MODES DE REALISATION ET DE MISE EN OEUVRE

De manière classique, un véhicule ferroviaire comporte plusieurs voitures reliées entre elles et montées sur des bogies comprenant des essieux. Chaque essieu comprend deux roues, chacune adaptée pour venir en contact avec un des deux rails formant une voie ferroviaire.

En référence à la figure 1, il est représenté une roue 1 d'un véhicule ferroviaire en contact avec un rail 2 d'une voie ferroviaire. Le rail 2 s'étend longitudinalement et comprend, de manière classique, un champignon 21, adapté pour être en contact avec une roue 1 d'un véhicule ferroviaire. Le champignon 21 comprend une surface supérieure 22 et au moins une surface latérale 23.

Par la suite, en référence à la figure 1, il est représenté un repère orthogonal (X, Y, Z) lié au rail 2 tel que :
- l'axe X s'étend longitudinalement de droite à gauche selon l'axe de rotation d'une roue 1 en déplacement sur le rail 2,
- l'axe Y s'étend longitudinalement d'avant en arrière selon la longueur du rail 2, et orthogonalement à l'axe X, et
- l'axe Z s'étend verticalement de bas en haut selon la hauteur de la roue 1 posée sur le rail 2.

Une roue ferroviaire 1 comprend, de manière classique, une table de roulement 11 adaptée pour être en contact avec la surface supérieure 22 du champignon 21 du rail 2 sur lequel circule le véhicule, une surface de guidage, également appelée boudin 12, adaptée pour être en contact avec la surface latérale 23 du champignon 21 afin de guider le véhicule le long de la voie ferrée, et un moyeu 13 dans lequel est monté un axe s'étendant selon l'axe horizontal X et reliant deux roues 1 afin de former un essieu. De manière classique, le diamètre du boudin 12 est plus grand que le diamètre de la table de roulement 11 comme illustré à la figure 1.

Toujours en référence à la figure 1, la table de roulement 11 présente un profil de révolution comprenant une partie sensiblement plane 14 et une partie inclinée 15 favorisant la prise de virage d'un véhicule ferroviaire, la partie plane 14 étant située entre la partie inclinée 15 et le boudin 12. Comme illustré à la figure 1, le diamètre de la partie inclinée 15 est décroissant depuis la partie plane 14, de diamètre sensiblement constant, jusqu'à l'extrémité de la roue 1.

La présence d'une partie inclinée 15 est une caractéristique des roues ferroviaires européennes. En effet, lors d'un virage, la roue 1 située à l'extérieur de la courbe du virage est en contact avec le rail 2 au niveau de la partie plane 14 de la table de roulement 11 tandis que la roue 1 située à l'intérieur de la courbe du virage est en contact avec le rail 2 au niveau de la partie inclinée 15. Ainsi, sur un même essieu comprenant deux roues 1 tournant à la même vitesse angulaire, la vitesse tangentielle de chaque roue 1 au niveau du contact avec un rail 2 peut être différente grâce à la différence de diamètre engendrée par l'inclinaison du profil de la table de roulement 11. Ceci facilite la prise de virage d'un véhicule ferroviaire.

Le déplacement du véhicule ferroviaire sur une voie ferroviaire engendre une usure des parties 14, 15 de la table de roulement 11 de la roue 1 et l'apparition de défauts de type « fissure de fatigue » dans l'épaisseur de la table de roulement 11. Aussi, chaque roue 1 d'un véhicule ferroviaire est contrôlée à l'aide d'un système de détection 3 afin de prévenir tout risque de rupture.

En référence à la figure 2, il est représenté schématiquement une forme de réalisation d'un système de détection 3 pour détecter manuellement un défaut dans une roue 1 d'un véhicule ferroviaire. Le système de détection 3 comprend un support de capteur 5 adapté pour transmettre des ultrasons dans une roue 1 à contrôler via un film de liquide, un capteur à ultrasons 4 monté dans ledit support 5 et un système hydraulique 9 pour alimenter le support 5 en liquide.

En référence à la figure 2, le capteur à ultrasons 4 est adapté pour émettre des ultrasons qui se propagent à travers la roue 1 selon un axe de capteur C. De préférence, le capteur à ultrasons 4 utilise la technologie multiélément (Phased Array en anglais). Lorsque les ultrasons rencontrent un défaut, tel qu'une fissure ou un écaillage, les ultrasons sont réfléchis par le défaut et se propagent alors en direction du capteur à ultrasons 4. Le capteur à ultrasons 4, adapté pour recevoir des ultrasons, détermine la position du défaut à partir du temps mesuré entre l'émission et la réception des ultrasons, c'est-à-dire le temps que les ultrasons ont mis pour atteindre le défaut depuis le capteur 4 puis pour revenir au capteur 4. Ceci permet donc de calculer la distance entre le capteur 4 et le défaut pour une position angulaire donnée. Aussi pour contrôler l'ensemble de la roue 1, le capteur à ultrason 4 doit être déplacé tout autour de la roue 1.

Le capteur à ultrasons 4 est connecté à un module de gestion (non représenté), de préférence, de manière électrique et informatique. Un tel capteur à ultrasons 4 et un tel module de gestion sont connus de l'homme du métier et ne seront pas présentés plus en détails par la suite.

Le support de capteur 5 permet de positionner le capteur à ultrasons 4 relativement à une roue 1 afin de calculer la position d'un défaut dans la roue 1 pour une position angulaire donnée de ladite roue 1. Comme illustré à la figure 2, le support de capteur 5 selon l'invention comprend une enceinte 6 et un organe de contact 7. L'enceinte 6 et l'organe de contact 7 sont reliés de manière solidaire ou amovible comme cela sera présenté par la suite.

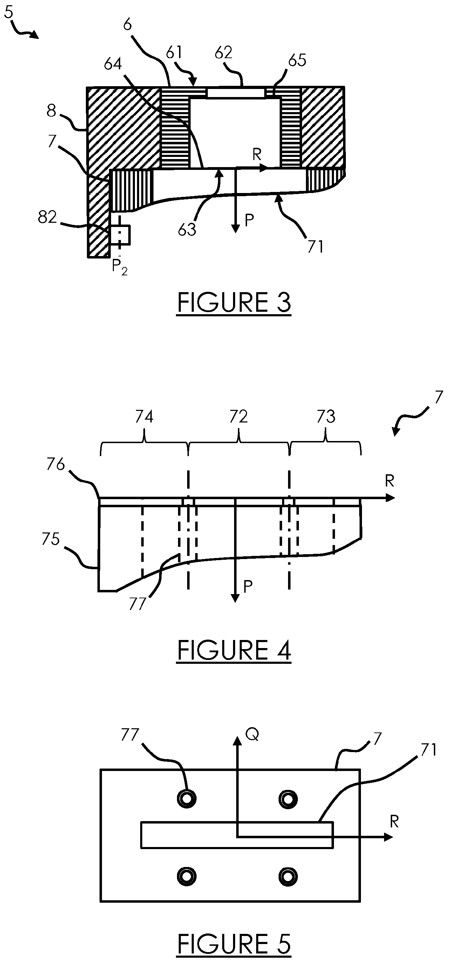

En référence à la figure 3 représentant le support de capteur 5, l'enceinte 6 comprend une extrémité amont 61 comprenant une ouverture de montage 62 apte à recevoir un capteur à ultrasons 4, et une extrémité aval 63 comprenant une ouverture de passage 64 des ultrasons, l'ouverture de montage 62 et l'ouverture de passage 64 étant alignées selon un axe de propagation P. Comme cela sera présenté par la suite, le capteur 4 est placé dans le support de capteur 5 de manière à ce que l'axe de capteur C et l'axe de propagation P soient coaxiaux.

Le volume intérieur 65 de l'enceinte 6, formé entre l'extrémité amont 61 et l'extrémité aval 63, est adapté pour être rempli d'un liquide de propagation, de préférence, de l'eau. Ainsi, les ultrasons émis par le capteur 4 au niveau de l'extrémité amont 61 de l'enceinte 6 se propagent, selon l'axe de propagation P, dans le liquide du volume intérieur 65 de l'enceinte 6 jusqu'à l'ouverture de passage 64 de l'extrémité aval 63. De manière préférée, l'enceinte 6 a une capacité comprise entre 30 ml et 50 ml.

De manière préférée, comme illustré à la figure 2, l'enceinte 6 comprend un orifice d'entrée et un orifice de sortie adaptés pour être reliés fluidiquement au système hydraulique 9 afin de générer une circulation de liquide dans le volume intérieur 65 de l'enceinte 6 comme cela sera présenté par la suite.

L'extrémité aval 63 de l'enceinte 6 s'étend dans un plan transversal à l'axe de propagation P qui sera désigné par la suite plan de contact.

En référence aux figures 3 à 5, un organe de contact 7 est monté à l'extrémité aval 63 de l'enceinte 6 et s'étend sensiblement dans le plan de contact afin de pouvoir venir en contact avec une roue 1 à contrôler.

Comme illustré à la figure 5, l'organe de contact 7 possède de manière préférée une forme globale de pavé. L'organe de contact 7 comprend une ouverture d'accès 71 débouchant dans le volume intérieur 65 de l'enceinte 6. L'ouverture d'accès 71 s'étend longitudinalement selon un axe de détection R appartenant au plan de contact. Comme cela sera présenté par la suite, l'ouverture d'accès 71 est adaptée pour s'étendre parallèlement à l'axe X de la roue 1 au cours d'un contrôle volumique de la roue 1 afin de détecter des défauts. Lorsque l'organe de contact 7 est relié à l'enceinte 6, l'ouverture de montage 62 de l'enceinte 6 et l'ouverture d'accès 71 sont alignées selon l'axe de propagation P, de sorte que les ultrasons se propagent, dans le liquide, du capteur 4 jusqu'à la roue 1 à travers le volume intérieur 65 de l'enceinte 6.

Par la suite, en référence aux figures 3 à 5, il est représenté un repère orthogonal (P, Q, R) lié au support de capteur 5 dans lequel l'axe P s'étend selon l'épaisseur de l'ouverture d'accès 71, l'axe Q s'étend selon la largeur de l'ouverture d'accès 71 et l'axe R s'étend selon la longueur de l'ouverture d'accès 71.

De manière préférée, l'ouverture d'accès 71 possède une longueur comprise entre 80 mm et 100 mm et une largeur comprise entre 10 mm et 20 mm. De préférence encore, l'ouverture d'accès 71 possède également une forme rectangulaire.

L'organe de contact 7 comprend une section, définie dans un plan de section (P, R), qui est croissante selon l'axe de détection R afin de s'adapter à la forme d'une roue 1, en particulier, de sa table de roulement 11. De préférence, la section de l'organe de contact 7 définit trois parties : une partie médiane 72, une première partie d'extrémité 73 dont l'épaisseur est inférieure à celle de la partie médiane 72, et une deuxième partie d'extrémité 74 dont l'épaisseur est supérieure à celle de la partie médiane 72. De manière avantageuse, la partie médiane 72 est adaptée pour être en contact avec la partie plane 14 de la table de roulement 11, la première partie d'extrémité fine 73 est adaptée pour s'étendre à proximité du boudin 12 de la roue 1 tandis que la deuxième partie d'extrémité épaisse 74 est adaptée pour être en contact avec la partie inclinée 15 de la table de roulement 11. Ainsi, de manière avantageuse, l'axe de propagation P s'étend radialement à l'axe X de la roue 1 lors de la mise en oeuvre du procédé de détection comme cela sera présenté par la suite.

De manière préférée, la partie médiane 72 possède une épaisseur comprise entre 12 mm et 15 mm, la première partie d'extrémité fine 73 possède une épaisseur comprise entre 7 mm et 12 mm, et la deuxième partie d'extrémité épaisse 74 possède une épaisseur comprise entre 15 mm et 25 mm.

En référence à la figure 4, l'organe de contact 7 comprend une partie aval flexible 75, de préférence en mousse souple, afin de se déformer et ainsi assurer l'étanchéité du contact de l'organe de contact 7 avec la roue 1 à contrôler et, ce, malgré les usures ou déformations de la roue 1. L'organe de contact 7 assure ainsi un contact étanche aussi bien avec des roues 1 neuves que des roues 1 usées ou reprofilées. L'organe de contact 7 comprend également une partie amont rigide 76, de préférence en mousse rigide, en contact avec l'extrémité aval 63 de l'enceinte 6 afin de relier l'organe de contact 7 à ladite enceinte 6 de manière solidaire et sécurisée. La partie aval flexible 75 et la partie amont rigide 76 de l'organe de contact 7 sont assemblées ensemble, de préférence, par collage. Il a été présenté un organe de contact 7 en mousse, mais il va de soi que d'autres matériaux flexibles pourraient convenir, notamment du caoutchouc ou du liège, afin d'assurer l'étanchéité du contact de l'organe de contact 7 sur la roue 1.

En référence aux figures 4 et 5, l'organe de contact 7 comprend des orifices traversants 77, de préférence quatre et dans la partie sensiblement plane 72, afin de fixer l'organe de contact 7 à l'enceinte 6 par vissage. L'utilisation de vis permet un montage amovible facilitant le remplacement de l'organe de contact 7, notamment lors de la maintenance. Le montage amovible permet également d'utiliser une pluralité d'organes de contact 7 présentant chacun une section de forme différente afin de contrôler des pièces de formes variées. Un tel montage permet en outre de positionner précisément l'ouverture d'accès 71 par rapport à l'ouverture de passage 64 de l'enceinte 6, afin de garantir la propagation des ultrasons du capteur 4 jusqu'à la roue 1 selon l'axe de propagation P.

Il a été présenté un organe de contact 7 relié de manière amovible à l'enceinte 6 par vissage, cependant, il va de soi que tout autre montage amovible/solidaire pourrait être utilisé. Il a été présenté un organe de contact 7 comprenant quatre orifices 77, mais il va de soi qu'il pourrait en comprendre moins de quatre ou plus de quatre. De même, leur position pourrait être différente afin de maintenir la position de l'ouverture d'accès 71.

En utilisation, le liquide compris dans l'enceinte 6 est libre de passer par l'ouverture d'accès 71. Aussi, lorsque le support de capteur 5 est en contact avec une roue 1, l'ouverture d'accès 71 de l'organe de contact 7 est fermée par la table de roulement 11 de la roue 1, formant ainsi une enceinte 6 étanche remplie de liquide de propagation, de sorte que les ultrasons puissent se propager entre le capteur 4 et la roue 1. L'organe de contact 7 permet ainsi d'assurer un contact étanche avec une roue 1, tout en résistant aux usures engendrées par le déplacement du support de capteur 5 sur la roue 1. De manière avantageuse, le liquide de propagation ne se déverse pas sur la roue 1, ce qui procure, d'une part, une économie d'eau et permet, d'autre part, une application en centre de maintenance où le déversement d'eau au sol est gênant pour les travaux de maintenance connexes réalisés à proximité et simultanément au contrôle des roues 1. En effet, la quantité d'eau déversée, notamment par suintement, est faible et n'a pas d'incidence sur les travaux effectués en centre de maintenance.

En référence aux figures 3, 6 et 7, le support de capteur 5 comprend une structure de guidage 8 afin de faciliter le déplacement du support de capteur 5 autour de la roue 1. Dans cet exemple, en référence à la figure 3, la structure de guidage 8 comporte un corps principal dans lequel est logée l'enceinte 6 afin de la positionner de manière précise. De préférence, la structure de guidage 8 est solidaire à l'enceinte 6 du support 5.

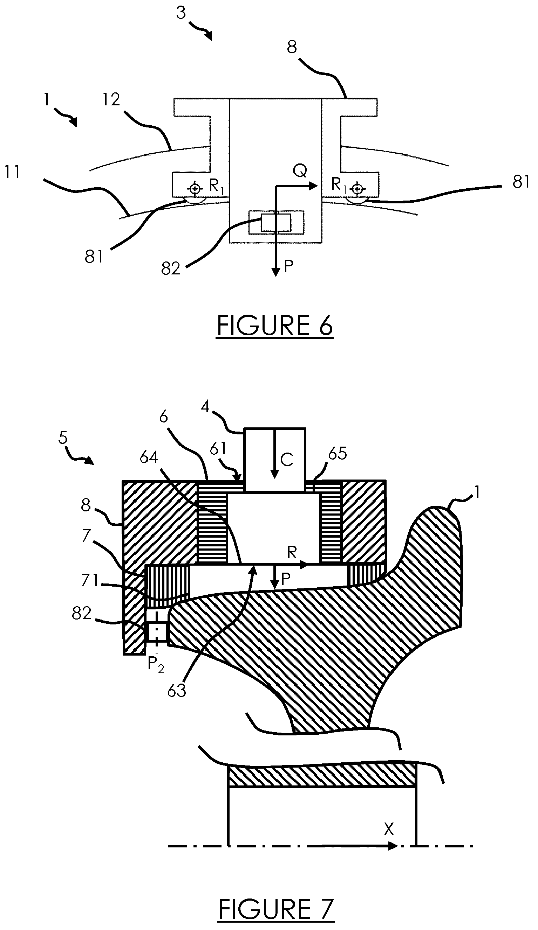

Comme illustré aux figures 6 et 7, la structure de guidage 8 comprend des premières roues de guidage 81 montées sur des axes R₁ parallèles à l'axe de détection R et une deuxième roue de guidage 82 montée sur un axe P₂ parallèle à l'axe P. Les roues de guidage 81, 82 sont adaptées pour être en contact avec la roue ferroviaire 1.

De préférence, les premières roues de guidage 81 sont placées de part et d'autre de l'enceinte 6, l'une en avant et l'autre en arrière de l'enceinte 6 au cours de sa rotation autour de l'axe X de la roue 1. Les premières roues de guidage 81 sont adaptées pour être en contact avec la table de roulement 11 afin de positionner axialement le support de capteur 5 sur la roue 1, autrement dit selon l'axe de propagation P. Autrement dit, les premières roues 81 permettent au support de capteur 5 de tourner autour de la table de roulement 11 de manière guidée et d'assurer que l'organe de contact 7 soit comprimé de manière homogène pour toute positon angulaire de la roue 1.

La deuxième roue de guidage 82 est adaptée pour être en contact avec le bord latéral de la roue 1 afin de positionner radialement le système de détection 3 sur la roue 1, c'est-à-dire, selon l'axe de détection R. Autrement dit, la deuxième roue de guidage 82 permet de garantir que l'organe de contact 7 est bien positionné à proximité du boudin 12 de la roue 1. Ainsi, en utilisation, le support de capteur 5 est en butée sur la roue 1 grâce aux roues de guidage 81, 82.

Il a été présenté une structure de guidage 8 comprenant deux premières roues de guidage 81 et une deuxième roue de guidage 82, mais il va de soi que la structure 8 pourrait comprendre une ou plus de deux premières roues de guidage 81 et plus d'une deuxième roue de guidage 82 afin de guider le support de capteur 5 par rapport à la roue 1 à contrôler.

Il a été présenté une structure de guidage comprenant deux premières roues de guidage 81 et une deuxième roue de guidage 82, mais il va de soi que la structure pourrait comprendre d'autres types d'éléments de guidage du support de capteur 5 sur la roue 1, notamment des patins de frottement cylindriques.

De préférence, les roues de guidage 81, 82 sont aimantées de manière à maintenir le contact entre le support de capteur 5 et la roue 1. Ainsi, lorsqu'un opérateur utilise le support de capteur 5, la liaison magnétique réduit l'effort que l'opérateur doit fournir afin de maintenir le support de capteur 5 contre la roue 1. En outre, tout risque de désalignement et de désengagement est limité.

En référence à la figure 2, le système de détection 3 comprend en outre un système hydraulique 9 afin d'alimenter le volume intérieur 65 de l'enceinte 6 en liquide de propagation. Le système hydraulique 9 comprend un réservoir 91 apte à contenir une quantité de liquide de propagation, de préférence de l'ordre de 20 litres de liquide, et une pompe hydraulique 92 adaptée pour alimenter le volume intérieur 65 de l'enceinte 6 en liquide de propagation par une canalisation d'alimentation 93, la canalisation d'alimentation 93 étant reliée à l'orifice d'entrée de l'enceinte 6. Etant donné que l'organe de contact 7 assure l'étanchéité du volume intérieur 65 lorsque le support de capteur 5 est appliqué contre la roue 1, la pompe 92 n'a pas besoin de maintenir le liquide à une pression élevée dans le volume intérieur 65, ce qui permet de limiter les dimensions de la pompe hydraulique 92.

Afin de réguler la pression dans le volume intérieur 65, le système hydraulique 9 comprend une canalisation d'évacuation 94, reliant l'enceinte 6 au réservoir 91, adaptée pour vider au moins en partie le volume intérieur 65 afin de réduire la pression, la canalisation d'évacuation 94 étant reliée à l'orifice de sortie de l'enceinte 6. De manière avantageuse, le réservoir 91 comporte une grille de décantation (non représentée) afin d'isoler les particules collectées par le support de capteur 5.

Le système hydraulique 9 assure ainsi l'autonomie en liquide de propagation du système de détection 3. De plus, le système hydraulique 9 est aisément transportable par un opérateur effectuant le contrôle des roues 1 d'un véhicule ferroviaire.

Afin que le système de détection 3 soit autonome, il comprend en outre au moins une batterie (non représentée) alimentant en électricité le système de détection 3, notamment la pompe hydraulique 92 et le module de gestion.

Du fait des faibles dimensions du système hydraulique 9 et de son autonomie, le système de détection 3 est, dans son ensemble, aisément transportable, ce qui permet à un opérateur de contrôler manuellement et de manière rapide une pluralité de roues l.

Dans la suite de la description, il va être présenté une mise en oeuvre d'une détection d'un défaut dans une roue ferroviaire 1.

En pratique, le système de détection 3 est calibré au moyen d'une roue de référence (entière ou une portion de cette dernière) pour laquelle les défauts sont déterminés.

De manière préliminaire, le capteur à ultrasons 4 est monté dans l'ouverture de montage 62 afin que l'axe de capteur C et l'axe de propagation P soient coaxiaux comme illustré à la figure 7. Le système hydraulique 9 est relié au support de capteur 5 mais la pompe 92 est inactivée.

De manière classique, un véhicule ferroviaire est amené dans un centre de maintenance afin de contrôler les roues 1. Une fosse est aménagée sous les rails de circulation 2, sur lesquels est positionné le véhicule ferroviaire, afin de permettre à un opérateur d'accéder aux roues 1 du véhicule ferroviaire. Autrement dit, les roues 1 ne sont pas déposées.

L'opérateur utilise, depuis la fosse, le système de détection 3 sur la roue 1. Pour cela, il appuie les premières roues de guidage 81 sur la table de roulement 11 de la roue afin de positionner radialement le support de capteur 5 par rapport à la roue 1 comme illustré à la figure 6. L'opérateur appuie également la deuxième roue de guidage 82 sur le bord latéral de la roue 1 afin de positionner axialement le système de détection 3 par rapport à la roue 1 comme illustré à la figure 7. En position, l'organe de contact 7 se déforme afin d'épouser la forme de la table de roulement 11 et ainsi assurer l'étanchéité du contact, ce qui a pour effet de fermer l'ouverture d'accès 71, c'est-à-dire, le volume intérieur 65 de l'enceinte 6.

Les différences d'épaisseur de l'organe de contact 7 permettent de coopérer par complémentarité de formes avec la circonférence de la roue 1. En outre, du fait de sa flexibilité, l'organe de contact 7 permet de s'affranchir des usures de la roue 1 tout en garantissant une étanchéité optimale de l'enceinte 6.

L'ouverture d'accès 71 s'étend, selon sa longueur, selon l'axe X de la roue 1 afin de permettre la propagation des ultrasons depuis le capteur 4 dans toute la longueur de la table de roulement 11, c'est-à-dire, aussi bien dans sa partie plane 14 que dans sa partie inclinée 15. Pour une position angulaire donnée, le capteur à ultrasons 4 peut détecter tout défaut dans l'épaisseur de la roue 1. Ainsi, il est possible de contrôler entièrement une roue 1 en déplaçant le support de capteur 5 à la périphérie de la roue 1.

Une fois le support de capteur 5 en position sur la roue 1, l'opérateur active la pompe hydraulique 92 afin d'alimenter en liquide l'enceinte 6. Le contact entre l'organe de contact 7 et la roue 1 étant étanche, l'enceinte 6 est remplie de liquide, aucune bulle d'air ne pouvant ainsi perturber les mesures. La roue 1 est alors dite en immersion localisée.

L'opérateur active alors le capteur à ultrasons 4 afin de contrôler la roue 1 et de détecter un défaut dans le volume de la roue 1 selon l'axe de propagation P. Afin de contrôler entièrement la roue 1, l'opérateur déplace le support de capteur 5 le long de la table de roulement 11, guidé par les roues de guidage 81, 82. Avantageusement, la longueur de l'ouverture de passage 64 de l'enceinte 6 et la longueur de l'ouverture d'accès 71 de l'organe de contact 7 sont adaptées pour permettre au capteur à ultrasons 4 de contrôler intégralement la table de roulement 11 en un seul passage.

De manière avantageuse, la consommation de liquide est très réduite du fait de l'étanchéité mise en oeuvre par l'organe de contact 7. Un tel système de détection 3 est ainsi parfaitement compatible avec des travaux en centre de maintenance.

Grâce aux roues de guidages aimantées 81, 82, l'effort que doit fournir l'opérateur afin de maintenir le support de capteur 5 en contact avec la roue 1 est réduit, ce qui limite la pénibilité de l'opérateur.

Lorsque l'opérateur a contrôlé la roue 1, il désactive la pompe 92, l'enceinte 6 est vidée du liquide de propagation et l'opérateur retire le support de capteur 5 de la roue 1.

Il a été présenté le contrôle des roues 1 d'un véhicule ferroviaire depuis une fosse, mais il va de soi que l'invention pourrait s'appliquer au contrôle des roues d'un essieu déposé. De même, il a été présenté le contrôle d'une roue 1 d'un véhicule ferroviaire, mais il va de soi que l'invention s'applique au contrôle d'autres pièces, telles qu'un rail ferroviaire ou l'axe d'un essieu.

Grâce au système de détection selon l'invention, l'opérateur peut contrôler manuellement les roues d'un véhicule ferroviaire. De plus, le faible encombrement du système permet à l'opérateur de contrôler aisément une roue montée sur un véhicule ferroviaire. Il n'est alors pas nécessaire de déposer les roues afin de les contrôler.

Grâce au système de détection selon l'invention, les ultrasons se propagent du capteur à la roue à travers le flux de liquide, ce qui permet de contrôler une roue quelle que soit sa forme, notamment les roues ferroviaires utilisées en Europe qui comprennent une partie inclinée. De plus, l'organe de contact flexible assure l'étanchéité du contact entre le système de détection et la roue afin de limiter la perte en liquide de propagation. Aussi, il est possible de limiter la capacité du réservoir de liquide, ce qui rend aisé le transport du système de détection, tout en assurant une autonomie suffisante pour le contrôle des roues d'une rame entière. En cas d'usure de l'organe de contact, celui-ci est aisément remplaçable grâce à son montage amovible sur le support de capteur.

## Revendications

1. Support de capteur à ultrasons (5), en particulier pour un système manuel de détection de défauts dans une pièce à contrôler (1) d'un véhicule ferroviaire, le support de capteur (5) comprenant:
- une enceinte (6), adaptée pour être remplie d'un liquide de propagation, comprenant une extrémité amont (61) comprenant une ouverture de montage (62) apte à recevoir un capteur à ultrasons (4) et une extrémité aval ouverte (63), et
- un organe de contact (7) relié à l'extrémité aval (63) de ladite enceinte (6) et comprenant une ouverture d'accès (71) débouchant à l'intérieur de l'enceinte (6), les ouvertures de montage (62) et d'accès (71) étant alignées selon un axe de propagation (P),
**support de capteur (5) caractérisé en ce que** l'organe de contact (7) est, au moins en partie, flexible de manière à assurer un contact étanche avec la pièce (1) à contrôler afin de fermer l'enceinte (6) et, l'organe de contact (7) s'étendant sensiblement transversalement audit axe de propagation (P), l'ouverture d'accès (71) de l'organe de contact (7) s'étendant longitudinalement selon un axe de détection (R), l'organe de contact (7) comprend une section, définie dans un plan de section (P, R), qui est croissante selon l'axe de détection (R).

2. Support de capteur (5), selon la revendication 1, dans lequel la section de l'organe de contact (7) définit une partie médiane (72), une première partie d'extrémité(73) dont l'épaisseur est inférieure à celle de la partie médiane (72), et une deuxième partie d'extrémité (74) dont l'épaisseur est supérieure à celle de la partie médiane (72).

3. Support de capteur (5), selon la revendication 2, dans lequel la partie médiane (72) possède une épaisseur comprise entre 12 mm et 15 mm, la première partie d'extrémité fine (73) possède une épaisseur comprise entre 7 mm et 12 mm et la deuxième partie d'extrémité épaisse (74) possède une épaisseur comprise entre 15 mm et 25 mm.

4. Support de capteur (5) selon l'une des revendications 1 à 3, dans lequel l'organe de contact (7) comprend une partie aval flexible (75) et une partie amont rigide (76) reliée à ladite enceinte(6).

5. Support de capteur (5) selon l'une des revendications 1 à 4, comprenant au moins une roue de guidage (81, 82) adaptée pour être en contact avec la pièce à contrôler (1).

6. Support de capteur (5) selon la revendication 5, dans lequel la roue de guidage (81, 82) est aimantée.

7. Système de détection (3) comprenant un support de capteur (5), selon l'une des revendications précédentes, et au moins un capteur à ultrasons (4) monté dans l'ouverture de montage (62) de manière à émettre des ultrasons selon l'axe de propagation (P).

8. Système de détection (3), selon la revendication 7, comprenant au moins un système hydraulique (9) adapté pour générer une circulation de liquide dans l'enceinte (6) du support de capteur (5).

9. Ensemble d'une pièce à contrôler (1) d'un véhicule ferroviaire et d'un système de détection (3) selon l'une des revendications 7 à 8, la pièce à contrôler (1) comprenant une table de roulement (11) dont la section axiale comprend une partie plane (14) et une partie inclinée (15), l'organe de contact (7) est en contact avec les parties (14, 15) de la table de roulement (11) de la pièce à contrôler (1).
